# EUROPÄISCHE PATENTSCHRIFT

(11) **EP 2 897 510 B1**
(45) Veröffentlichungstag und Bekanntmachung des Hinweises auf die Patenterteilung: **29.11.2017**
(21) Anmeldenummer: 13760058.1
(22) Anmeldetag: 13.09.2013
(51) Int. Cl.: A47J 36/28, A45D 34/04, B65D 81/00, A61F 7/03

(54) **TRANSPORTABLE VORRICHTUNG ZUM ERHITZEN VON LEBENSMITTELN UND TRANSPORTABLER HEIZKÖRPER**
TRANSPORTABLE APPARATUS FOR HEATING FOOD AND TRANSPORTABLE HEATING-ELEMENT
DISPOSITIF TRANSPORTABLE DESTINÉ À CHAUFFER DES ALIMENTS ET ELEMENT CHAUFFANT

(30) Priorität: 19.09.2012 EP 12185093
(43) Veröffentlichungstag der Anmeldung: 29.07.2015
(73) Patentinhaber: Arnold, Uwe, 67069 Ludwigshafen (DE)
(72) Erfinder: Arnold, Uwe, 67069 Ludwigshafen (DE)
(74) Vertreter: Zenz Patentanwälte Partnerschaft mbB
(86) Internationale Anmeldenummer: PCT/EP2013/069019
(87) Internationale Veröffentlichungsnummer: WO 2014/044609

(56) Entgegenhaltungen:
- EP-A1- 1 882 644
- DE-A1-102008 015 677
- DE-U1-202010 015 079

## Beschreibung

Die Erfindung betrifft eine transportable Vorrichtung zum Erhitzen von Lebensmitteln, die einen Behälter zum Aufnehmen der Lebensmittel und einen an den Behälter angrenzenden Erhitzungsraum aufweist, der über eine gemeinsame wärmeleitende Wandung mit dem Behälter thermisch gekoppelt und zugleich von diesem getrennt ist und der einen Stoff oder eine Stoffmischung enthält, die bei Zufuhr einer Flüssigkeit, insbesondere von Wasser, in einer exothermen chemischen Reaktion Wärme erzeugt. Ferner betrifft die Erfindung einen transportablen Heizkörper, der beispielsweise in der genannten transportablen Vorrichtung zum Erhitzen von Lebensmitteln verwendbar ist.

Beispielsweise ist aus der Patentschrift EP 1 126 004 B1 eine Stoffmischung bekannt, die Calciumoxid (CaO) und Aluminiumpulver (Al) umfasst. Bei Wasserzufuhr findet eine mehrstufige chemische Reaktion statt, bei der zum einen das Calciumoxid mit dem Wasser unter Wärmeentwicklung in Calciumhydroxid umgesetzt wird und bei der dann das Calciumhydroxid mit dem Aluminium zu Calciumaluminat und Wasserstoff reagiert, wobei weitere Wärme entsteht. Mit einer derartigen Stoffmischung lassen sich Temperaturen von 90°C und mehr erreichen, wobei zu beachten ist, dass bei Temperaturen über 100°C aus einem Teil des Wassers zusätzlich Wasserdampf entsteht. Wenn die Reaktion in einem geschlossenen Behälter abläuft, so kann der hohe Gasdruck bei Temperaturen über 100°C zu einem Bersten des Behälters führen. Mit der in der Druckschrift vorgeschlagenen Heizmischung werden deshalb nur Erwärmungen unter 100°C ausgeführt.

Eine andere Stoffmischung zum Erzeugen von Wärme ist aus der DE 10 2008 015 677 A1 oder der DE 20 2010 015 079 U1 bekannt.

Aus der DE 20 2010 015 079 U1 ist ein Behältnis bekannt mit einem ersten Aufnahmeraum für ein verzehrbares Produkt, der von einem zweiten Aufnahmeraum umgeben ist, der ein Sorptionsmaterial, z.B. Zeolith, enthält. Der zweite Aufnahmeraum ist von einem dritten Aufnahmeraum umschlossen, in dem sich eine Flüssigkeit befindet, z.B. Wasser. Die Wand zwischen dem dritten und dem zweiten Aufnahmeraum ist derart durchstoßbar, dass die Flüssigkeit aus dem dritten Aufnahmeraum in den zweiten Aufnahmeraum eindringen kann. Das Sorptionsmittel nimmt Wasser auf, wobei Wärme erzeugt wird, die das Produkt in dem ersten Aufnahmeraum erwärmt. Problematisch ist bei dieser konstruktiven Gestaltung die Durchmischung des nur an wenigen Punkten in die zweite Kammer eindringenden Wassers mit dem Sorptionsmittel während des Einsetzens der Sorptionsreaktion.

Bei der DE 10 2008 015 677 A1 befinden sich in einem verschlossenen Beutel ein Zeolith-Granulat sowie ein Wasser enthaltender Beutel. Um die Wärme zu erzeugen, wird zunächst der Wasser-Beutel zum Platzen gebracht, woraufhin sich das Wasser innerhalb des umgebenden Beutels verteilt und auf das Zeolith-Granulat einwirkt. Das Zeolith nimmt das Wasser auf, wobei Wärme erzeugt wird. Nachteilig bei der dort vorgeschlagenen Anordnung ist es, dass zunächst eine zügige Verteilung des Wassers innerhalb des Beutels erreicht werden muss, was beispielsweise durch wasserleitende Zusatzschichten aus einem saugfähigen Material erreicht werden soll. Wird nämlich das Wasser nicht schlagartig in dem Beutel verteilt, so reagiert es zunächst nur mit den angrenzenden Teilen des Zeolith-Granulats, wobei diese Mischung dann eine Barriere bildet, die eine weitere Verteilung des Wassers behindert. Dadurch verringert sich wiederum die Wärmeausbeute.

Aus der EP 1 882 644 A1 ist eine transportable Vorrichtung zum Erhitzen von Lebensmitteln mit einem Behälter zum Aufnehmen der Lebensmittel und einem an den Behälter angrenzenden abgeschlossenen Erhitzungsraum, der über eine gemeinsame wärmeleitende Wandung mit dem Behälter thermisch gekoppelt ist, bekannt. Der Erhitzungsraum ist in eine an den Behälter angrenzende erste Kammer und eine äußere zweite Kammer unterteilt. In der ersten Kammer befindet sich eine feste Reagenz (eine Mischung aus einem aktiven Metallpulver mit einem Metallsalz), die bei Zufuhr einer Flüssigkeit (Wasser) in einer exothermen chemischen Reaktion Wärme erzeugt, wobei Wasserdampf gebildet wird. In der Wandung zwischen den beiden Kammern sind Öffnungen so angeordnet, dass der in der ersten Kammer gebildete Dampf in die zweite Kammer entweichen kann. In der zweiten Kammer befinden sich Beutel mit einer gasdurchlässigen Umhüllung, die ein Adsorptionsmittel (Aktivkohle, Silicagel o.ä.) enthalten, um den aus der ersten Kammer über die Öffnungen eintretenden Dampf zu adsorbieren, um der Druckerhöhung im Erhitzungsraum entgegenzuwirken.

Aufgabe der Erfindung ist es daher, eine transportable Vorrichtung zum Erhitzen von Lebensmitteln oder einen transportablen Heizkörper zu schaffen, bei der bzw. dem die oben genannten Nachteile des Standes der Technik vermieden werden und hohe Temperaturen oberhalb von 100°C erreicht werden können, ohne dass heiße Dämpfe oder unangenehme Gerüche aus dem Erhitzungsraum austreten.

Diese Aufgabe wird erfindungsgemäß durch eine transportable Vorrichtung mit den Merkmalen des Anspruchs 1 gelöst. Ferner wird diese Aufgabe durch einen transportablen Heizkörper mit den Merkmalen des Anspruchs 9 gelöst.

Die transportable Vorrichtung zum Erhitzen von Lebensmitteln weist einen Behälter zum Aufnehmen der Lebensmittel und einen an den Behälter angrenzenden abgeschlossenen Erhitzungsraum auf. Der Erhitzungsraum ist über eine gemeinsame wärmeleitende Wandung mit dem Behälter thermisch gekoppelt und zugleich hermetisch von diesem getrennt. Der Erhitzungsraum weist eine erste Kammer und eine zweite Kammer auf, die durch eine wasserdampfdurchlässige Wandung getrennt sind. In der ersten Kammer befindet sich ein Stoff oder eine Stoffmischung, die bei Zufuhr einer Flüssigkeit, welche beispielsweise Wasser ist oder enthält, in einer exothermen chemischen Reaktion Wärme erzeugt, wobei Wasserdampf gebildet wird. In der zweiten Kammer befindet sich ein Adsorptionsmittel, beispielsweise Zeolith (beispielsweise in Form eines Granulats, eines Pulvers oder eines porösen Presskörpers), das das aus der ersten Kammer über die wasserdampfdurchlässige Wandung (in Form von Wasserdampf) eintretende Wasser unter Wärmebildung adsorbieren kann. Damit das Adsorptionsmittel, insbesondere das Zeolith, diese Funktion ausführen kann, muss es selbstverständlich wasserfrei oder zumindest wasserarm sein. Unter einer wasserdampfdurchlässigen Wandung soll hier jede Trenneinrichtung verstanden werden, die einerseits Wasserdampf von der ersten Kammer in die zweite Kammer durchlässt, die aber andererseits ein Übertreten der Stoffe von der einen in die andere Kammer (insbesondere vor dem Beginn der exothermen Reaktion) im Wesentlichen verhindert, also beispielsweise ein wasserdampfdurchlässiges durchgehendes Gewebe oder eine wasserdampfdurchlässige Folie, aber auch eine als solche undurchlässige Wandung, die mit einer oder mehreren Durchtrittsöffnungen versehen ist, wobei die Öffnungen so gestaltet sein müssen (entsprechend geringe Größe oder Einsetzen von in eine Kammer hineinragenden Röhrchen), dass der Stoffübertritt im Wesentlichen verhindert wird. Die zweite Kammer ist derart über zumindest einem Teil der ersten Kammer angeordnet, dass sich die Unterseite der zweiten Kammer über dem nach Zufuhr des Wassers entstehenden Reaktionsgemisch in der ersten Kammer (das regelmäßig ein höheres Volumen in der ersten Kammer einnimmt als die Stoffmischung zuvor) befindet. Dadurch lässt sich vorteilhaft vermeiden, dass die Flüssigkeit, insbesondere das Wasser, noch vor der Reaktion mit dem Stoff bzw. Stoffgemisch in der ersten Kammer bereits zu einem wesentlichen Teil durch die wasserdampfdurchlässige Wandung in die zweite Kammer eindringt.

Die Erfindung basiert auf dem Kerngedanken, dass in dem Erhitzungsraum eine chemische exotherme Reaktion mit einer physikalischen exothermen Reaktion in einer optimalen Weise kombiniert werden, so dass die bei der chemischen Reaktion auftretenden Gase zumindest teilweise derart bei der physikalischen exothermen Reaktion adsorbiert werden, dass der Druck unter dem Maximaldruck gehalten werden kann, der zu einem Bersten der Wandung führen könnte. Dadurch gelingt es, den Erhitzungsraum gegenüber der Umgebung abzuschließen. Lediglich für den Notfall kann ein Überdruckventil in der Wandung des Erhitzungsraums vorgesehen sein. Durch die Aufteilung in die Kammern wird ferner erreicht, dass die Flüssigkeit, beispielsweise das Wasser, zunächst vorrangig für die exotherme chemische Reaktion verwendet wird und im Wesentlichen nur der entstehende Wasserdampf für die exotherme physikalische Reaktion zur Verfügung steht. Wenn hier von einer ersten Kammer und einer zweiten Kammer gesprochen wird, so soll dies auch diejenigen Fälle umfassen, bei denen mehrere erste und/oder zweite Kammern vorgesehen sind.

Vorzugsweise befindet sich die wärmeleitende Wandung zumindest an einem Teil der Unterseite des Behälters. Dies erleichtert die Wärmezufuhr. Die wärmeleitende Wandung ist vorzugsweise eine Metallwandung. Hier kann insbesondere eine preiswerte Metallwandung, beispielsweise aus Dosenblech, vorgesehen sein, wobei der gesamte Behälter aus diesem Material geformt sein kann.

Vorzugsweise ist die zweite Kammer unter dem Behälter und die erste Kammer unter der zweiten Kammer angeordnet und sind die erste Kammer, die zweite Kammer und die wärmeleitende Wandung bildender Boden des Behälters von etwa gleicher horizontaler Ausdehnung. Die erste Kammer und die zweite Kammer sind vorzugsweise von einer Bauhöhe, die bei etwa 3 bis 30 % der Außenabmessungen des Bodens des Behälters liegt. Dies bedeutet, dass ein flacher Erhitzungsraum gebildet wird, der ein geringes Volumen einnimmt und eine gute Wärmeübertragung zu dem Behälter ermöglicht. Bei einer anderen Ausführungsform kann die zweite Kammer ringförmig derart über der ersten Kammer angeordnet sein, dass die erste Kammer in einem zentralen Bereich und die zweite Kammer in einem dem zentralen Bereich umgebenden ringförmigen Bereich an einen die wärmeleitende Wandung bildenden Boden des Behälters angrenzen. Bei dieser Ausführungsform wird die in der ersten Kammer gebildete Wärme zumindest teilweise direkt an den Behälterboden abgegeben, was zu einer schnelleren Aufheizung des Behälters führt. In Abhängigkeit von dem für die exotherme chemische Reaktion verwendeten Stoff bzw. Stoffgemisch und in Abhängigkeit vom Material des Behälters und insbesondere vom Material der wärmeleitenden Wandung kann es vorteilhaft sein, die erste Kammer nicht direkt an den wärmeleitenden Boden des Behälters angrenzen zu lassen, weil möglicherweise Stoffe der Stoffmischung mit dem Metall des Behälterbodens reagieren könnten. Die Wahl der Konstruktionsalternativen hängt somit insbesondere von der Wahl des Stoffs bzw. der Stoffmischung und der verwendeten Behälter-Materialien ab.

Bei einer vorteilhaften Weiterbildung der erfindungsgemäßen Vorrichtung wird die wasserdampfdurchlässige Wandung von einem textilen Gewebe, insbesondere von einem Vliesstoff, gebildet. Dieser soll von einer Dicke und Faserdichte sein, die einen schnellen Hindurchtritt des Wasserdampfes ermöglicht, andererseits aber ausreichende mechanische Trennsicherheit gewährleistet. Es ist auch denkbar, einen mehrschichtigen Wandungsaufbau zu wählen, bei dem sich die Eigenschaften der Wandung im Verlauf der Reaktionen ändern. Insbesondere kann es hier vorteilhaft sein, dass die Wandung zunächst flüssigkeitsdicht ist, so dass die in die erste Kammer eingebrachte Flüssigkeit nicht in die zweite Kammer eindringen kann und vollständig für die chemische Reaktion zur Verfügung steht. Die Wandung kann eine Schicht umfassen, die sich entweder in der Flüssigkeit, z.B. im Wasser, auflöst oder bei Wärmeeinwirkung schmilzt. Wirkt dann die Flüssigkeit oder die in der ersten Kammer gebildete Wärme auf diese, vorzugsweise an der Unterseite der wasserdampfdurchlässigen Wandung befindliche Schicht ein, so löst sie sich auf oder schmilzt, was anschließend den Durchtritt der Flüssigkeit, beispielsweise des Wassers, und des Wasserdampfes gestattet. Eine zweite, hinter der sich auflösenden oder schmelzenden Schicht angeordnete Schicht dient danach lediglich zur mechanischen Abtrennung der beiden Kammern. Die wasserdampfdurchlässige Wandung kann beispielsweise aus einer Kombination einer wasserlöslichen Folie mit einem darüber angeordneten Vlies, Filterpapier oder auch Metallsieb bestehen.

Bei einer vorteilhaften Ausführungsform ist das textile Gewebe der wasserdampfdurchlässigen Wandung auf der der ersten Kammer zugewandten Seite mit einer flüssigkeitsabweisenden Beschichtung versehen oder hydrophobiert. Dies bewirkt ein verzögertes Eindringen der Flüssigkeit, beispielsweise des Wassers, in die zweite Kammer, so dass die Flüssigkeit zunächst der chemischen Reaktion in der ersten Kammer vollständiger zur Verfügung steht.

Die für die chemische Reaktion verwendete Flüssigkeit kann entweder bereits in der transportablen Vorrichtung deponiert sein, oder sie kann über eine Öffnung von außen der ersten Kammer zugeführt werden. Eine vorteilhafte Ausführungsform ist dadurch gekennzeichnet, dass eine die Flüssigkeit, beispielsweise Wasser, enthaltende dritte Kammer vorgesehen ist, die von der ersten und der zweiten Kammer getrennt ist, wobei eine Vorrichtung zum Herstellen einer die Flüssigkeit aus der dritten Kammer in die erste Kammer einleitenden Verbindung vorgesehen ist. Vorzugsweise ist die dritte Kammer benachbart zu der ersten Kammer und durch eine flüssigkeitsdichte Wandung getrennt angeordnet. Die Vorrichtung zum Herstellen einer die Flüssigkeit aus der dritten Kammer in die erste Kammer einleitenden Verbindung umfasst dabei beispielsweise eine Vorrichtung zum Herstellen einer Öffnung in der flüssigkeitsdichten Wandung.

Bei einer anderen vorteilhaften Weiterbildung weist eine Außenwandung der ersten Kammer eine wiederverschließbare Öffnung zum Einleiten der Flüssigkeit auf. Die wiederverschließbare Öffnung kann beispielswiese ein selbstschließendes Ventil aus einem elastischen Material aufweisen. Bei dieser Ausführungsform ist es denkbar, dass die Flüssigkeit von einer Dosiervorrichtung, beispielsweise einer Kolbenspritze, aufgenommen werden kann, woraufhin die Dosiervorrichtung (d.h. die Spritze) an die wiederverschließbare Öffnung angekoppelt wird und die Flüssigkeit durch die Öffnung hindurch eingespritzt wird, woraufhin sich die Öffnung wieder verschließt.

Bei einer bevorzugten Ausführung der transportablen Vorrichtung zum Erhitzen von Lebensmitteln bildet der Stoff bzw. die Stoffmischung bei Zufuhr der Flüssigkeit in einer exothermen chemischen Reaktion neben dem Wasserdampf weitere Reaktionsgase (wie beispielsweise Wasserstoff), wobei die Wandung auch für diese weiteren Reaktionsgase durchlässig ist und wobei die Reaktionsgase ebenfalls von dem Zeolith absorbiert werden, vorzugsweise ebenfalls in einer exothermen Reaktion.

Eine bevorzugte Ausführungsform ist dadurch gekennzeichnet, dass der Stoff in der ersten Kammer Calciumoxid ist bzw. die Stoffmischung in der ersten Kammer Calciumoxid enthält. Vorzugsweise enthält die Stoffmischung zusätzlich Aluminiumpulver oder -granulat. Bei einer bevorzugten Weiterbildung kann die Stoffmischung ferner Natriumcarbonat oder Kaliumcarbonat enthalten.

Bei bevorzugten Ausführungsformen ist die transportable Vorrichtung dadurch gekennzeichnet, dass der Erhitzungsraum und zumindest ein sich anschließender Teil des Behälters von einer wärmeisolierenden Wandung umhüllt sind. Dadurch wird eine unerwünschte Wärmeableitung in die Umgebung verringert.

Der erfindungsgemäße transportable Heizkörper enthält einen an eine wärmeableitende Außenwandung angrenzenden, hermetisch abgeschlossenen Erhitzungsraum. Der Erhitzungsraum weist eine erste Kammer und eine zweite Kammer auf. Die beiden Kammern sind durch eine wasserdampfdurchlässige Trenneinrichtung getrennt. In der ersten Kammer befindet sich ein Stoff oder eine Stoffmischung, der bzw. die bei Zufuhr einer Flüssigkeit in einer exothermen chemischen Reaktion Wärme erzeugt, wobei Wasserdampf gebildet wird. Vorzugsweise ist oder enthält die Flüssigkeit Wasser. In der zweiten Kammer befindet sich ein Adsorptionsmittel, vorzugsweise ein Zeolith, das das aus der ersten Kammer über die wasserdampfdurchlässige Trenneinrichtung in Form von Wasserdampf eintretende Wasser unter Wärmebildung adsorbieren kann. Ein derartiger Heizkörper, der starr oder auch flexibel ausgebildet sein kann, findet beispielsweise Verwendung bei der zuvor beschriebenen transportablen Vorrichtung zum Erhitzen von Lebensmitteln. Darüber hinaus kann ein solcher Heizkörper auch als Bestandteil eines Heizkissens oder einer anderen flexibel, d.h. unabhängig von Stromversorgungsanschlüssen oder anderen Gegebenheiten am Einsatzort, einzusetzenden Einrichtung zum Heizen oder Erwärmen Verwendung finden, wie zum Beispiel in beheizbaren Schuheinlagen oder auch als Heizkörper, der in eine zu erwärmende Flüssigkeit eingetaucht werden kann. Der transportable Heizkörper ist zur Verwendung in einer vorgegebenen Lage vorgesehen. In dieser Lage ist die zweite Kammer derart über zumindest einem Teil der ersten Kammer angeordnet, dass sich die Unterseite der zweiten Kammer über dem nach Zufuhr der Flüssigkeit entstehenden Reaktionsgemisch in der ersten Kammer befindet. Dies ist insbesondere bei der Verwendung in einer beheizbaren Schachtel für Gebäck (z.B. Pizza) oder auch bei einer beheizbaren Sitzauflage von Vorteil.

Bei einer Weiterbildung der Erfindung ist der transportable Heizkörper im Wesentlichen flächig ausgebildet ist, indem er in einer zu einer ebenen oder gekrümmten Fläche senkrechten Richtung von geringerer Abmessung ist als in dieser Fläche. Dabei erstrecken sich die erste und/oder die zweite Kammer im Wesentlichen parallel zu der ebenen oder gekrümmten Fläche über die gesamte oder einen überwiegenden Teil des Heizkörpers. Eine bevorzugte Ausführungsform ist dadurch gekennzeichnet, dass sich die zweite Kammer im Wesentlichen parallel zu der ebenen oder gekrümmten Fläche über die gesamte oder einen überwiegenden Teil des Heizkörpers erstreckt und die wärmeableitende Außenwandung eine Wandung der zweiten Kammer ist. Diese flächigen Ausführungsformen eignen sich besonders zum Einlegen in eine Pizzaschachtel oder für Heizkissen oder Schuheinlagen. Erfindungsgemäß umfasst die wasserdampfdurchlässige Trenneinrichtung eine wasserdampfdurchlässige gemeinsame Wandung der ersten Kammer und der zweiten Kammer. Vorzugsweise wird die wasserdampfdurchlässige Wandung von einem textilen Gewebe, insbesondere von einem Vliesstoff, gebildet. Dieser soll von einer Dicke und Faserdichte sein, die einen schnellen Hindurchtritt des Wasserdampfes ermöglicht, andererseits aber ausreichende mechanische Trennsicherheit gewährleistet. Es ist auch denkbar, einen mehrschichtigen Wandungsaufbau zu wählen, bei dem sich die Eigenschaften der Wandung im Verlauf der Reaktionen ändern. Insbesondere kann es hier vorteilhaft sein, dass die Wandung zunächst flüssigkeitsdicht ist, so dass die in die erste Kammer eingebrachte Flüssigkeit nicht in die zweite Kammer eindringen kann und vollständig für die chemische Reaktion zur Verfügung steht. Die Wandung kann eine Schicht umfassen, die sich entweder in der Flüssigkeit, z.B. im Wasser, auflöst oder bei Wärmeeinwirkung schmilzt. Wirkt dann die Flüssigkeit oder die in der ersten Kammer gebildete Wärme auf diese, vorzugsweise an der Unterseite der wasserdampfdurchlässigen Wandung befindliche Schicht ein, so löst sie sich auf oder schmilzt, was anschließend den Durchtritt der Flüssigkeit, beispielsweise des Wassers, und des Wasserdampfes gestattet. Eine zweite, hinter der sich auflösenden oder schmelzenden Schicht angeordnete Schicht dient danach lediglich zur mechanischen Abtrennung der beiden Kammern. Die wasserdampfdurchlässige Wandung kann beispielsweise aus einer Kombination einer wasserlöslichen Folie mit einem darüber angeordneten Vlies, Filterpapier oder auch Metallsieb bestehen.

Bei einer anderen Ausführungsform umfasst die wasserdampfdurchlässige Trenneinrichtung wenigstens eine in einer gemeinsamen Trennwandung der ersten Kammer und der zweiten Kammer angeordnete Öffnung. Beispielsweise ist eine Vielzahl von in der gemeinsamen Trennwandung angeordneten Öffnungen vorgesehen, wobei deren Größe so dimensioniert ist, dass der Stoff oder die Stoffmischung und/oder das Adsorptionsmittel nicht von der einen in die andere Kammer übertreten können. Bei einer alternativen oder zusätzlichen Weiterbildung ist jede der wenigstens einen in der gemeinsamen Trennwandung angeordneten Öffnungen mit einer den Wasserdampf an einen vorgegebenen Ort in der zweiten Kammer lenkenden Leiteinrichtung, beispielsweise einem Röhrchen, verbunden.

Bei einer bevorzugten Weiterbildung des erfindungsgemäßen Heizkörpers ist eine die Flüssigkeit enthaltende dritte Kammer vorgesehen, die von der ersten und der zweiten Kammer getrennt ist, wobei eine Vorrichtung zum Herstellen einer die Flüssigkeit aus der dritten Kammer in die erste Kammer einleitenden Verbindung vorgesehen ist. Vorzugsweise ist die dritte Kammer benachbart zu der ersten Kammer und durch eine flüssigkeitsdichte Wandung getrennt angeordnet ist, und umfasst die Vorrichtung zum Herstellen einer die Flüssigkeit aus der dritten Kammer in die erste Kammer einleitenden Verbindung eine Vorrichtung zum Herstellen einer Öffnung in der flüssigkeitsdichten Wandung.

Alternativ ist der transportable Heizkörper dadurch gekennzeichnet, dass eine Außenwandung der ersten Kammer eine wiederverschließbare Öffnung zum Einleiten der Flüssigkeit aufweist. Bei dieser Ausführungsform ist es denkbar, dass die Flüssigkeit von einer Dosiervorrichtung, beispielsweise einer Kolbenspritze, aufgenommen werden kann, woraufhin die Dosiervorrichtung (d.h. die Spritze) an die wiederverschließbare Öffnung angekoppelt wird und die Flüssigkeit durch die Öffnung hindurch eingespritzt wird, woraufhin sich die Öffnung wieder selbsttätig verschließt.

Vorteilhafte und/oder bevorzugte Ausführungsformen der Erfindung sind in den Unteransprüchen gekennzeichnet.

Nachfolgend wird die Erfindung anhand von in den Zeichnungen dargestellten bevorzugten Ausführungsbeispielen näher erläutert. In den Zeichnungen zeigen:
Figur 1 eine schematische Schnittdarstellung durch eine erste Ausführungsform der erfindungsgemäßen transportablen Vorrichtung zum Erhitzen von Lebensmitteln;
Figur 2 eine schematische Schnittdarstellung durch eine zweite Ausführungsform der erfindungsgemäßen transportablen Vorrichtung; und
Figur 3 eine schematische Schnittdarstellung durch eine dritte Ausführungsform der erfindungsgemäßen transportablen Vorrichtung.

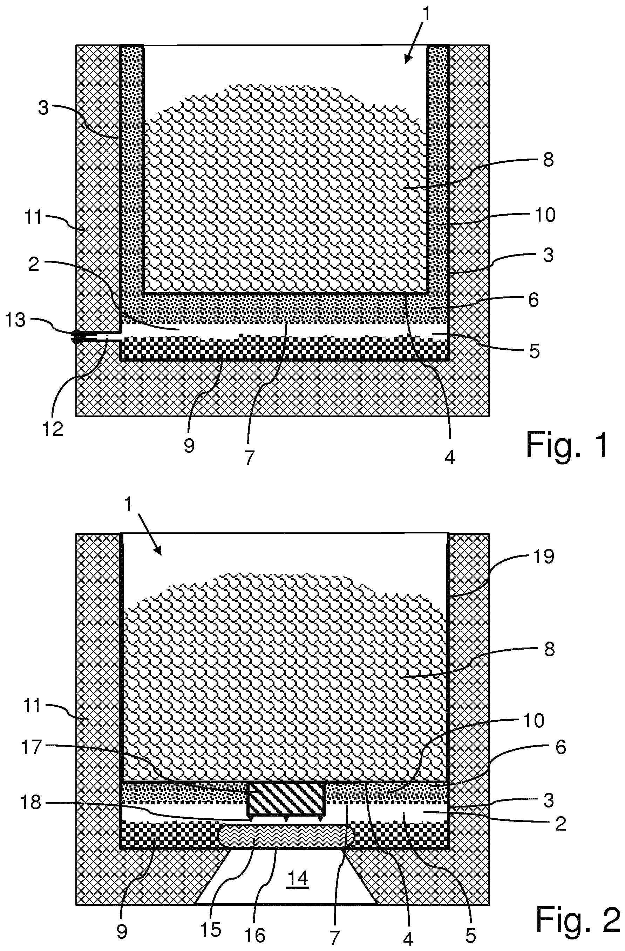

Die Figuren 1 bis 3 zeigen schematische Schnittdarstellungen dreier bevorzugter Ausführungsbeispiele der erfindungsgemäßen transportablen Vorrichtung zum Erhitzen von Lebensmitteln. Die Form der Behälter und die daran angepasste Form des Erhitzungsraums richten sich u. a. nach der Art des zu erhitzenden Lebensmittels. Die Lebensmittel können beispielsweise Flüssigkeiten darstellen, wie Getränke oder Suppen. In diesem Fall treten Temperaturen unterhalb der Siedetemperatur von 100 °C auf. Jedoch ist die erfindungsgemäße transportable Vorrichtung aufgrund des Umstands, dass mit ihr Temperaturen oberhalb von 100°C erzeugt werden können, insbesondere auch für solche Lebensmittel geeignet, die nicht nur lediglich erwärmt werden sollen, sondern bei denen das Erhitzen auch der Zubereitung dient, die also beispielsweise gebacken werden sollen. Beim Erhitzen sollen somit Prozesse in den Lebensmitteln ablaufen, die das Lebensmittel in einen genießbaren Zustand versetzen. Solche Prozesse umfassen insbesondere das Fertigbacken vorgebackener Gebäckstücke.

Figur 1 zeigt eine erste bevorzugte Ausführungsform der transportablen Vorrichtung. In einem Behälter 1, der geschnitten dargestellt ist, befindet sich ein Lebensmittel, beispielsweise eine Teigportion für ein zu backendes Gebäckstück. Um den Behälter 1 herum ist ein Erhitzungsraum 2 angeordnet, der allseitig geschlossen ist. Der Behälter 1 mit dem Erhitzungsraum 2 bildet hier ein doppelwandiges Gefäß. Der Erhitzungsraum 2 ist über die gemeinsame wärmeleitende Wandung 4 mit dem Behälter thermisch gekoppelt. Um die Außenwandung 3 des Erhitzungsraums 2 herum ist eine Wärmeisolationsschicht 11 angeordnet. Der Erhitzungsraum 2 ist durch die Wandung 7 in eine untere erste Kammer 5 und eine obere zweite Kammer 6 unterteilt. In der unteren ersten Kammer 5 befindet sich eine Stoffmischung 9, die bei Zufuhr von Wasser in einer exothermen chemischen Reaktion Wärme erzeugt, wobei Wasserdampf gebildet wird. Um die Zufuhr des Wassers in die erste Kammer 5 zu ermöglichen, weist die transportable Vorrichtung gemäß Figur 1 eine Öffnung 12 (beispielsweise in Form eines dünnen Rohres) auf, die durch ein selbstschließendes Ventil 13, beispielsweise aus einem elastischen Material, verschlossen ist. Diese Art des Verschlusses ist vergleichbar mit dem Ventil eines aufblasbaren Balls. Um das Einbringen des Wassers in die untere Kammer 5 zu ermöglichen, nimmt die Stoffmischung 9 - wie in Figur 1 dargestellt - nicht das gesamte Volumen der ersten Kammer 5 ein. Vielmehr verbleibt über der Stoffmischung 9 in der Kammer 5 ein Leervolumen. Dieses Leervolumen kann beispielsweise ganz oder teilweise evakuiert sein. Ein derartiges Evakuieren des Volumens ermöglicht aufgrund des Unterdrucks ein einfaches Einspritzen der erforderlichen Wassermenge durch die Öffnung 12 hindurch. Zu diesem Zweck wird beispielsweise eine (in Figur 1 nicht dargestellte) Kanüle einer mit einer vorgegebenen Wassermenge gefüllten Spritze durch das Ventil 13 hindurch in die Öffnung 12 eingestochen. Anschließend wird die vorgegebene Wassermenge in die Kammer 5 entleert, woraufhin eine Durchmischung des Wassers mit der Stoffmischung 9 stattfinden kann.

Die obere zweite Kammer 6 ist mit einem Zeolith-Granulat gefüllt. Anstelle des Granulats kann auch ein Presskörper aus Zeolith-Granulat oder (weniger bevorzugt) ein Pulver verwendet werden.

Bei dieser und den anderen Ausführungsformen ist die Stoffmischung 9 vorzugsweise eine Mischung aus Calciumoxid und Aluminium, wobei beide Stoffe vorzugsweise in Pulverform miteinander gemischt sind. Bei einer bevorzugten Mischung wird eine vorgegebene Menge des Calciumoxids mit etwa derselben bis etwa der vierfachen Menge des Aluminiumpulvers gemischt. Zusätzlich kann noch ein geringerer Anteil Natriumcarbonat (beispielsweise 1/3 der Menge des Calciumoxids) zugesetzt werden. Die Menge des zugegebenen Wassers beträgt vorzugsweise das 1,5- bis 2,5-fache der Menge der Pulvermischung, vorzugsweise etwa das Doppelte der Menge der Pulvermischung.

Zum Erwärmen der Lebensmittel 8 in dem Behälter 1 wird wie folgt vorgegangen. Eine vorgegebene Menge Wasser wird durch die Öffnung 12 in die untere Kammer 5 eingespritzt. Nach dem Herausziehen der Nadel der Spritze verschließt sich die Öffnung 12 durch das Ventil 13 automatisch. Das Wasser vermischt sich in der Kammer 5 mit der Pulvermischung 9, und es beginnt eine exotherme chemische Reaktion, die zur Erwärmung der Mischung in der Kammer 5 führt. Bei dieser chemischen Reaktion und der damit einhergehenden Erwärmung entstehen Gase, wie beispielsweise im Falle einer Pulvermischung aus Calciumoxid und Aluminium Wasserstoff sowie Wasserdampf. Die entstehende Wärme steigt zum Boden des Behälters auf. Zugleich durchdringen der Wasserdampf und die anderen entstehenden Gase die Wandung 7 und treffen in der Kammer 6 auf das Zeolith 10. Das Zeolith adsorbiert den Wasserdampf und die eindringenden Gase, wobei zusätzlich Wärme freigesetzt wird. Daneben kann auch ein Anteil des Wassers aus der Kammer 5 in die Kammer 6 gelangen, wo es ebenfalls unter Wärmebildung durch das Zeolith adsorbiert wird. Die in der unteren Kammer 5 und der oberen Kammer 6 gebildete Wärme erhitzt den Behälter 1 und die darin befindlichen Lebensmittel 8. Die wärmeisolierende Ummantelung 11 sorgt für geringe Wärmeverluste. Aufgrund der Erwärmung des Wassers und der entstehenden heißen Reaktionsgase erhöht sich der Druck in dem Erhitzungsraum 2, der allseitig von Wandungen 3, 4 umschlossen ist. Der Erhitzungsraum 2 muss diesem Druck standhalten. Der Druck wird dann wiederum durch die Adsorption der Gase in dem Zeolith reduziert. Die verwendete Menge des in der Kammer 6 enthaltenen Zeoliths 10 muss auf die verwendeten Mengen der Stoffmischung und des Wassers so abgestimmt sein, dass der Druck während des gesamten Ablaufs einen Maximaldruck nicht überschreitet.

Die dampfdurchlässige Wandung 7 muss so ausgebildet sein, dass sie zumindest anfänglich dafür sorgt, dass das eingebrachte Wasser zum überwiegenden Teil in der ersten Kammer 5 verbleibt, um dort mit der Stoffmischung 9 zu reagieren. Zugleich muss die Wandung es ermöglichen, dass der in der Kammer 5 entstehende Dampf und die dort entstehenden Reaktionsprodukte gasförmiger Art schnell in die Kammer 6 geleitet werden. Als Wandung 7 kann beispielsweise ein dünner Vliesstoff verwendet werden, der bodenseitig mit einer wasserabweisenden Schicht überzogen ist. Anstelle des Vliesstoffs könnten auch andere Gewebe aus Textilfasern, Kunststoff oder Metall verwendet werden.

Figur 2 zeigt ein zweites Ausführungsbeispiel der erfindungsgemäßen transportablen Vorrichtung zum Erhitzen von Lebensmitteln. Bei der Ausführungsform gemäß Figur 2 ist die Erhitzungskammer 2 lediglich unter dem Behälter 1 mit den Lebensmitteln 8 angeordnet. Die Seitenwandung 19 des Behälters 1 ist außen lediglich mit der wärmeisolierenden Wandung 11 umhüllt. Der Erhitzungsraum 2 ist wiederum in eine untere erste Kammer 5 und eine obere zweite Kammer 6 unterteilt, zwischen denen sich die wasserdampfdurchlässige Wandung 7 befindet. In der oberen Kammer 6 befindet sich das Zeolith. In der unteren Kammer 5 befindet sich die Stoffmischung 9 und außerdem ist darin eine dritte Kammer 15 angeordnet, die die erforderliche Wassermenge enthält. Die dritte Kammer 15 ist von einer dünnen, wasserdichten Wandung umhüllt. Zum Auslösen der exothermen chemischen Reaktion ist es erforderlich, die dünne Wandung der dritten Kammer 15 zu zerstören. Dazu ist gemäß Figur 2 folgende Anordnung vorgesehen. Oberhalb der dritten Kammer 15 befindet sich eine zentral am Boden des Behälters 1 befestigte Halterung 17, beispielsweise ein Metallblock. An der Unterseite der Halterung 17 ist eine Mehrzahl von Spitzen 18 angeordnet, die in der Lage sind, die dünne Wandung der Kammer 15 zu durchstechen. Allerdings sind diese Spitzen vertikal beabstandet zu der oberen Wandung der Kammer 15 angeordnet, so dass sie die Wandung nur dann durchstechen können, wenn die Wandung den Spitzen angenähert wird. Zu diesem Zweck ist am Boden der wärmeisolierenden Umhüllung 11 eine Öffnung 14 vorgesehen und weist die bodenseitige Wandung der unteren Kammer 5 an der Stelle der Öffnung 14 eine elastische Membran 16 auf. Durch manuelles Eindrücken der Membran 16 kann die wassergefüllte Kammer 15 soweit nach oben bewegt werden, dass die Umhüllung der Kammer 15 gegen die Spitzen 18 gepresst wird. Dabei wird die Wandung zerstört, so dass das Wasser aus der Kammer 15 in die Kammer 5 eindringen und sich dort mit der Stoffmischung 9 vermischen kann. Die übrigen Merkmale des Ausführungsbeispiels gemäß Figur 2 entsprechen im Wesentlichen denen des Ausführungsbeispiels gemäß Figur 1, so dass auf die obigen Ausführungen verwiesen werden kann.

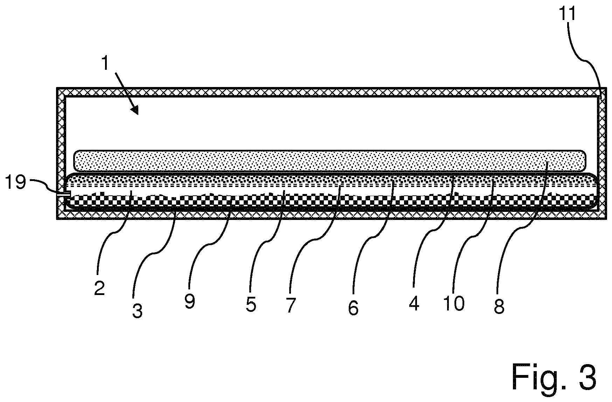

Figur 3 zeigt ein drittes Ausführungsbeispiel der erfindungsgemäßen transportablen Vorrichtung zum Erhitzen von Lebensmitteln, die insbesondere an das Erhitzen oder Backen flacher, flächiger Lebensmittel, wie beispielsweise einer Pizza, angepasst ist. Der Behälter 1 wird hierbei von einer wärmeisolierenden Hülle 11, beispielsweise einem Pappkarton, gebildet. Im Inneren des Behälters 1, d. h. auf dem Boden des Kartons, befindet sich der geschlossene Erhitzungsraum 2, der wiederum durch die wasserdampfdurchlässige Wandung 7 in eine untere Kammer 5 und eine obere Kammer 6 unterteilt ist. Das zu erhitzende Lebensmittel 8, beispielsweise die zu backende Pizza, liegt auf der wärmeleitenden Wandung 4 auf, die gleichzeitig eine den Erhitzungsraum 2 begrenzte Wandung und eine Wandung des Behälters 1 (Backraums) darstellt. In der unteren Kammer 5 befindet sich wiederum die Stoffmischung 9, während sich in der oberen Kammer 6 das Zeolith 10 befindet. Bei dem in Figur 3 dargestellten Ausführungsbeispiel weist die Außenwandung der unteren Kammer 5 wiederum eine verschließbare Öffnung 19 zum Einleiten von Wasser auf. Bei einer alternativen Ausführungsform der in Figur 3 gezeigten Variante kann auch das Wasser in einem wasserdichten Behälter innerhalb des Erhitzungsraums 2 untergebracht sein, wie dies beispielshaft anhand der Ausführungsform gemäß Figur 2 beschrieben wurde.

Um den Wirkungsgrad der Übertragung der Wärme von dem Erhitzungsraum auf das Lebensmittel 8 zu erhöhen und den Wärmeverlust zu verringern, sind verschiedene zusätzliche konstruktive Maßnahmen denkbar. Neben dem Aufbringen wärmeisolierender Schichten (beispielsweise Schicht 11) können auch auf der Innenseite des Behälters 1 wärmereflektierende Schichten aufgebracht sein. Beispielsweise kann die Innenwandung des Pappkartons gemäß Figur 3 mit einer Aluminiumfolie überzogen sein.

Die verwendeten Mengen der Stoffmischung 9, des zuzuführenden Wassers und des Zeoliths 10 sowie die Dicke der Wärmeisolationsschicht 11 sind so aufeinander und auf die Menge des Lebensmittels 8 abgestimmt, dass die gewünschte Temperatur im Behälter 1 für eine vorgegebene Mindestzeitdauer erreicht wird, ohne dass es zu einem Bersten des Erhitzungsraums 2 kommen kann. Durch geeignete Wahl der Stoffmischung 9 und der Wasserverteilung kann außerdem dafür gesorgt werden, dass es nicht zu lokalen oder zu schnellen Überhitzungen mit einem zu hohen Innendruck kommen kann. Eine optimale Wahl dieser Mengen bei vorgegebenen Abmessungen des Behälters 1 und Mengen des zu erhitzenden Lebensmittels 8 kann auf einfache Weise experimentell bestimmt werden.

Der den Erhitzungsraum 2 mit den Kammern 5 und 6 enthaltende flächige Heizkörper, wie er auf dem Boden des in Figur 3 gezeigten Kartons 1 aufliegt, um das darüber aufliegende Lebensmittel 8 zu erhitzen, kann auch für andere Zwecke Verwendung finden, beispielsweise als Bestandteil eines Heizkissens oder einer beheizbaren Schuheinlage.

## Patentansprüche

1. Transportable Vorrichtung zum Erhitzen von Lebensmitteln, aufweisend:
einen Behälter (1) zum Aufnehmen der Lebensmittel (8) und
einen an den Behälter (1) angrenzenden abgeschlossenen Erhitzungsraum (2), der über eine gemeinsame wärmeleitende Wandung (4) mit dem Behälter (1) thermisch gekoppelt und zugleich hermetisch von diesem getrennt ist,
wobei der Erhitzungsraum (2) eine erste Kammer (5) und eine zweite Kammer (6) aufweist, die durch eine wasserdampfdurchlässige Wandung (7) getrennt sind,
wobei sich in der ersten Kammer (5) ein Stoff oder eine Stoffmischung (9) befindet, der bzw. die bei Zufuhr einer Flüssigkeit in einer exothermen chemischen Reaktion Wärme erzeugt, wobei Wasserdampf gebildet wird,
wobei sich in der zweiten Kammer (6) ein Adsorptionsmittel (10) befindet, das das aus der ersten Kammer (5) über die wasserdampfdurchlässige Wandung (7) eintretende Wasser unter Wärmebildung adsorbieren kann, und
wobei die zweite Kammer (6) derart über zumindest einem Teil der ersten Kammer (5) angeordnet ist, dass sich die Unterseite der zweiten Kammer (6) über dem nach Zufuhr der Flüssigkeit entstehenden Reaktionsgemisch in der ersten Kammer (5) befindet.

2. Transportable Vorrichtung zum Erhitzen von Lebensmitteln nach Anspruch 1, **dadurch gekennzeichnet, dass** die Flüssigkeit Wasser ist oder enthält.

3. Transportable Vorrichtung zum Erhitzen von Lebensmitteln nach Anspruch 1 oder 2, **dadurch gekennzeichnet, dass** das Adsorptionsmittel ein Zeolith ist oder enthält.

4. Transportable Vorrichtung zum Erhitzen von Lebensmitteln nach einem der Ansprüche 1 - 3, **dadurch gekennzeichnet, dass** sich die wärmeleitende Wandung (4) zumindest an einem Teil der Unterseite des Behälters (1) befindet.

5. Transportable Vorrichtung zum Erhitzen von Lebensmitteln nach einem der Ansprüche 1 - 4, **dadurch gekennzeichnet, dass** die wasserdampfdurchlässige Wandung (7) von einem textilen Gewebe, insbesondere von einem Vliesstoff, gebildet wird und dass das textile Gewebe der wasserdampfdurchlässigen Wandung (7) auf der der ersten Kammer (5) zugewandten Seite mit einer wasserabweisenden Beschichtung versehen oder hydrophobisiert ist.

6. Transportable Vorrichtung zum Erhitzen von Lebensmitteln nach einem der Ansprüche 1 - 5, **dadurch gekennzeichnet, dass** eine die Flüssigkeit enthaltende dritte Kammer (15) vorgesehen ist, die von der ersten und der zweiten Kammer (5, 6) getrennt ist, wobei eine Vorrichtung (14, 16, 17, 18) zum Herstellen einer die Flüssigkeit aus der dritten Kammer (15) in die erste Kammer (6) einleitenden Verbindung vorgesehen ist.

7. Transportable Vorrichtung zum Erhitzen von Lebensmitteln nach einem der Ansprüche 1 - 6, **dadurch gekennzeichnet, dass** der Stoff in der ersten Kammer (5) Calciumoxid ist bzw. die Stoffmischung (9) in der ersten Kammer (5) Calciumoxid enthält.

8. Transportable Vorrichtung zum Erhitzen von Lebensmitteln nach Anspruch 7, **dadurch gekennzeichnet, dass** die Stoffmischung (9) in der ersten Kammer (5) zusätzlich Aluminiumpulver oder -granulat enthält.

9. Transportabler Heizkörper mit einer wärmeableitenden Außenwandung (4) und einem daran angrenzenden, hermetisch abgeschlossenen Erhitzungsraum (2),
wobei der Erhitzungsraum (2) eine erste Kammer (5) und eine zweite Kammer (6) aufweist, die durch eine wasserdampfdurchlässige Trenneinrichtung (7) getrennt sind,
wobei sich in der ersten Kammer (5) ein Stoff oder eine Stoffmischung (9) befindet, der bzw. die bei Zufuhr einer Flüssigkeit in einer exothermen chemischen Reaktion Wärme erzeugt, wobei Wasserdampf gebildet wird,
wobei sich in der zweiten Kammer (6) ein Adsorptionsmittel (10) befindet, das das aus der ersten Kammer (5) über die wasserdampfdurchlässige Trenneinrichtung (7) in Form von Wasserdampf eintretende Wasser unter Wärmebildung adsorbieren kann, und
wobei der Heizkörper zur Verwendung in einer vorgegebenen Lage vorgesehen ist und dass in dieser Lage die zweite Kammer (6) derart über zumindest einem Teil der ersten Kammer (5) angeordnet ist, dass sich die Unterseite der zweiten Kammer (6) über dem nach Zufuhr der Flüssigkeit entstehenden Reaktionsgemisch in der ersten Kammer (5) befindet.

10. Transportabler Heizkörper nach Anspruch 9, **dadurch gekennzeichnet, dass** er im Wesentlichen flächig ausgebildet ist, indem er in einer zu einer ebenen oder gekrümmten Fläche senkrechten Richtung von geringerer Abmessung ist als in dieser Fläche, wobei sich die erste (5) und/oder die zweite (6) Kammer im Wesentlichen parallel zu der ebenen oder gekrümmten Fläche über die gesamte oder einen überwiegenden Teil des Heizkörpers erstreckt.

11. Transportabler Heizkörper nach Anspruch 10, **dadurch gekennzeichnet, dass** sich die zweite Kammer (6) im Wesentlichen parallel zu der ebenen oder gekrümmten Fläche über die gesamte oder einen überwiegenden Teil des Heizkörpers erstreckt und die wärmeableitende Außenwandung( ) eine Wandung der zweiten Kammer (6) ist.

12. Transportabler Heizkörper nach einem der Ansprüche 9 - 11, **dadurch gekennzeichnet, dass** die Flüssigkeit Wasser ist oder Wasser enthält.

13. Transportabler Heizkörper nach einem der Ansprüche 9 - 12, **dadurch gekennzeichnet, dass** das Adsorptionsmittel ein Zeolith ist oder enthält.

14. Transportabler Heizkörper nach einem der Ansprüche 9 - 13, **dadurch gekennzeichnet, dass** die wasserdampfdurchlässige Trenneinrichtung eine wasserdampfdurchlässige gemeinsame Wandung (7) der ersten Kammer (5) und der zweiten Kammer (6) umfasst.

15. Transportabler Heizkörper nach einem der Ansprüche 9 - 13, **dadurch gekennzeichnet, dass** die wasserdampfdurchlässige Trenneinrichtung wenigstens eine in einer gemeinsamen Trennwandung der ersten Kammer (5) und der zweiten Kammer (6) angeordnete Öffnung umfasst.

16. Transportabler Heizkörper nach Anspruch 15, **dadurch gekennzeichnet, dass** eine Vielzahl von in der gemeinsamen Trennwandung angeordneten Öffnungen vorgesehen ist, wobei deren Größe so dimensioniert ist, dass der Stoff oder die Stoffmischung (9) und/oder das Adsorptionsmittel nicht von der einen in die andere Kammer übertreten können.

17. Transportabler Heizkörper nach einem der Ansprüche 9 - 16, **dadurch gekennzeichnet, dass** eine die Flüssigkeit enthaltende dritte Kammer (15) vorgesehen ist, die von der ersten und der zweiten Kammer (5, 6) getrennt ist, wobei eine Vorrichtung (14, 16, 17, 18) zum Herstellen einer die Flüssigkeit aus der dritten Kammer (15) in die erste Kammer (6) einleitenden Verbindung vorgesehen ist.

## Claims

1. Transportable apparatus for heating food, including:
a container (1) for accommodating the food (8) and an enclosed heating space (2) adjoining the container (1), which is thermally coupled to the container by a common thermally conductive wall (4) and at the same time is hermetically separate from it,
wherein the heating space (2) includes a first chamber (5) and a second chamber (6), which are separated by a steam-permeable wall (7),
wherein located in the first chamber (5) there is a substance or a substance mixture (9), which, when a liquid is supplied, produces heat in an exothermic chemical reaction, whereby steam is formed,
wherein located in the second chamber (6) there is an adsorption agent (10), which can adsorb water entering from the first chamber (5) via the steam-permeable wall (7) whilst generating heat, and wherein the second chamber (6) is arranged above at least a portion of the first chamber (5) such that the underside of the second chamber (6) is situated above the reaction mixture in the first chamber (6) produced after supply of the liquid.

2. Transportable apparatus for heating food as claimed in Claim 1, **characterised in that** the liquid is or includes water.

3. Transportable apparatus for heating food as claimed in Claim 1 or 2, **characterised in that** the adsorption agent is or includes a zeolite.

4. Transportable apparatus for heating food as claimed in one of Claims 1-3, **characterised in that** the thermally conductive wall (4) is situated at at least a portion of the underside of the container (1).

5. Transportable apparatus for heating food as claimed in one of Claims 1-4, **characterised in that** the steam-permeable wall (7) is constituted by a textile fabric, particularly a non-woven fabric, and that the textile fabric of the steam-permeable wall (7) is provided on the side directed towards the first chamber (5) with a water-repellent coating or made water-repellent.

6. Transportable apparatus for heating food as claimed in one of Claims 1-5, **characterised in that** a third chamber (15) containing the liquid is provided, which is separated from the first and the second chambers (5, 6), wherein a device (14, 16, 17, 18) is provided for producing a connection introducing the liquid from the third chamber (15) into the first chamber (6).

7. Transportable apparatus for heating food as claimed in one of Claims 1-6, **characterised in that** the substance in the first chamber (5) is calcium oxide or the substance mixture (9) in the first chamber (5) includes calcium oxide.

8. Transportable apparatus for heating food as claimed in Claim 7, **characterised in that** the substance mixture (9) in the first chamber additionally includes aluminium powder or granulate.

9. A transportable heating device, which includes a hermetically closed heating space (2) adjoining a thermally transmissive outer wall (4),
wherein the heating space (2) includes a first chamber (5) and a second chamber (6), which are separated by a steam-permeable separating device (7),
wherein situated in the first chamber (5) there is a substance or a substance mixture (9), which, when a liquid is supplied, produces heat in an exothermic chemical reaction, whereby steam is formed,
wherein situated in the second chamber (6) there is an adsorption agent (10), which can adsorb the water entering from the first chamber (5) via the steam-permeable separating device (7) in the form of steam whilst generating heat, and the heating device is provided for use in a predetermined position and that in this position the second chamber (6) is arranged above at least a proportion of the first chamber (5) such that the underside of the second chamber (6) is situated above the reaction mixture in the first chamber (5) which is produced after supply of the liquid.

10. A transportable heating device as claimed in Claim 9, **characterised in that** it is of substantially laminar construction **in that** it has a smaller dimension in a direction perpendicular to a flat or curved surface than the dimension in this surface, wherein the first (5) and/or second (6) chamber extends substantially parallel to the flat or curved surface over the entire heating device or a predominant proportion of it.

11. A transportable heating device as claimed in Claim 10, **characterised in that** the second chamber (6) extends substantially parallel to the flat or curved surface over the entire heating device or a predominant proportion of it and the thermally transmissive outer wall (4) is a wall of the second chamber (6).

12. A transportable heating device as claimed in one of Claims 9-11, **characterised in that** the liquid is water or includes water.

13. A transportable heating device as claimed in one of Claims 9-12, **characterised in that** the adsorption agent is or includes a zeolite.

14. A transportable heating device as claimed in one of Claims 9-13, **characterised in that** the steam-permeable separating device includes a steam-permeable common wall (7) of the first chamber (5) and the second chamber (6).

15. A transportable heating device as claimed in one of Claims 9-13, **characterised in that** the steam-permeable separating device includes at least one opening arranged in a common separating wall of the first chamber (5) and the second chamber (6).

16. A transportable heating device as claimed in Claim 15, **characterised in that** a plurality of openings arranged in the common separating wall is provided, wherein their size is so dimensioned that the substance or the substance mixture (9) and/or the adsorption agent (6) cannot pass from the one chamber into the other.

17. A transportable heating device as claimed in one of Claims 9-16, **characterised in that** a third chamber (15) containing the liquid is provided, which is separated from the first and the second chambers (5, 6), wherein a device (14, 16, 17, 18) is provided for producing a connection introducing the liquid from the third chamber (15) into the first chamber (6).

## Revendications

1. Dispositif transportable pour chauffer des produits alimentaires, présentant :
un récipient (1) pour recevoir les produits alimentaires (8), et
un espace de chauffage (2) fermé adjacent au récipient (1), lequel est couplé thermiquement avec le récipient (1) via une paroi thermoconductrice (4) commune et est simultanément séparé hermétiquement de celui-ci,
dans lequel l'espace de chauffage (2) présente une première chambre (5) et une deuxième chambre (6) qui sont séparées par une paroi perméable à la vapeur d'eau (7),
dans lequel, dans la première chambre (5), se trouve une substance ou un mélange de substances (9) laquelle ou lequel, en cas d'amenée de liquide, génère de la chaleur selon une réaction chimique exothermique, dans lequel de la vapeur d'eau est formée,
dans lequel, un adsorbant (10) se trouve dans la deuxième chambre (6), lequel peut adsorber l'eau en provenance de la première chambre (5) entrant via la paroi perméable à la vapeur d'eau (7) en générant de la chaleur, et
dans lequel la deuxième chambre (6) est disposée sur au moins une partie de la première chambre (5) de manière à ce que la partie inférieure de la deuxième chambre (6) se trouve au-dessus du mélange réactionnel produit dans la première chambre (5) après l'amenée du liquide.

2. Dispositif transportable pour chauffer des produits alimentaires selon la revendication 1, **caractérisé en ce que** le liquide est de l'eau ou contient de l'eau.

3. Dispositif transportable pour chauffer des produits alimentaires selon la revendication 1 ou 2, **caractérisé en ce que** l'adsorbant est une zéolithe ou contient une zéolithe.

4. Dispositif transportable pour chauffer des produits alimentaires selon l'une des revendications 1-3, **caractérisé en ce que** la paroi thermoconductrice (4) se trouve sur au moins une partie de la partie inférieure du récipient (1).

5. Dispositif transportable pour chauffer des produits alimentaires selon l'une des revendications 1-4, **caractérisé en ce que** la paroi perméable à la vapeur d'eau (7) est formée par un tissu textile, en particulier par un non-tissé, et que le tissu textile de la paroi perméable à la vapeur d'eau (7) est doté d'un revêtement hydrophobe sur le côté tourné vers la première chambre (5) ou est rendu hydrophobe.

6. Dispositif transportable pour chauffer des produits alimentaires selon l'une des revendications 1-5, **caractérisé en ce qu'**une troisième chambre (15) contenant le liquide est prévue, laquelle est séparée de la première et de la deuxième chambre (5, 6), dans lequel un dispositif (14, 16, 17, 18) pour chauffer une liaison envoyant le liquide de la troisième chambre (15) vers la première chambre (6) est prévu.

7. Dispositif transportable pour chauffer des produits alimentaires selon l'une des revendications 1-6, **caractérisé en ce que** la substance dans la première chambre (5) est de l'oxyde de calcium ou que le mélange de substances (9) dans la première chambre (5) contient de l'oxyde de calcium.

8. Dispositif transportable pour chauffer des produits alimentaires selon la revendication 7, **caractérisé en ce que** le mélange de substances (9) dans la première chambre (5) contient additionnellement de la poudre ou du granulat d'aluminium.

9. Corps de chauffage transportable avec une paroi extérieure de dissipation de chaleur (4) et un espace de chauffage (2) hermétiquement fermé adjacent à celle-ci,
dans lequel l'espace de chauffage (2) présente une première chambre (5) et une deuxième chambre (6) qui sont séparées par un dispositif de séparation perméable à la vapeur d'eau (7),
dans lequel une substance ou un mélange de substances (9) se trouve dans la première chambre (5), laquelle ou lequel, en cas d'amenée d'un liquide, génère de la chaleur selon une réaction chimique exothermique, dans lequel de la vapeur d'eau est formée,
dans lequel un adsorbant (10) se trouve dans la deuxième chambre (6), lequel peut adsorber l'eau en provenance de la première chambre (5) entrant sous la forme de vapeur d'eau via le dispositif de séparation perméable à la vapeur d'eau (7) en générant de la chaleur, et
dans lequel le corps de chauffage est prévu pour l'utilisation dans une position prescrite et dans cette position, la deuxième chambre (6) est disposée sur au moins une partie de la première chambre (5) de manière à ce que la partie inférieure de la deuxième chambre (6) se trouve au-dessus du mélange réactionnel produit après l'amenée du liquide dans la première chambre (5).

10. Corps de chauffage transportable selon la revendication 9, **caractérisé en ce qu'**il est sensiblement réalisé en nappe **en ce qu'**il est d'une dimension plus petite dans une direction perpendiculaire à un plan ou une surface courbe qu'au niveau de cette surface, dans lequel la première (5) et/ou la deuxième chambre (6) s'étend sensiblement parallèlement au plan ou à la surface courbe sur l'ensemble du corps de chauffage ou une majeure partie de celui-ci.

11. Corps de chauffage transportable selon la revendication 10, **caractérisé en ce que** la deuxième chambre (6) s'étend sensiblement parallèlement au plan ou à la surface courbe sur l'ensemble du corps de chauffage ou une majeure partie de celui-ci et que la paroi extérieure de dissipation de chaleur (4) est une paroi de la deuxième chambre (6).

12. Corps de chauffage transportable selon l'une des revendications 9-11, **caractérisé en ce que** le liquide est de l'eau ou contient de l'eau.

13. Corps de chauffage transportable selon l'une des revendications 9-12, **caractérisé en ce que** l'adsorbant est une zéolithe ou contient une zéolithe.

14. Corps de chauffage transportable selon l'une des revendications 9-13, **caractérisé en ce que** le dispositif de séparation perméable à la vapeur d'eau comprend une paroi perméable à la vapeur d'eau (7) commune à la première chambre (5) et la deuxième chambre (6).

15. Corps de chauffage transportable selon l'une des revendications 9-13, **caractérisé en ce que** le dispositif de séparation perméable à la vapeur d'eau comprend au moins une ouverture disposée dans une paroi de séparation commune à la première chambre (5) et la deuxième chambre (6).

16. Corps de chauffage transportable selon la revendication 15, **caractérisé en ce que** l'on prévoit une pluralité d'ouvertures disposées dans la paroi de séparation commune, dans lequel leur taille est dimensionnée de manière à ce que la substance ou le mélange de substances (9) et/ou l'adsorbant ne peuvent pas passer de l'une des chambres à l'autre.

17. Corps de chauffage transportable selon l'une des revendications 9-16, **caractérisé en ce que** l'on prévoit une troisième chambre (15) contenant le liquide, laquelle est séparée de la première et de la deuxième chambre (5, 6), dans lequel on prévoit un dispositif (14, 16, 17, 18) pour la création d'une liaison envoyant le liquide de la troisième chambre (15) vers la première chambre (6).
